# EUROPEAN PATENT APPLICATION

(11) **EP 1 764 307 A1**
(43) Date of publication of application: **21.03.2007**
(21) Application number: 05381045.3
(22) Date of filing: 14.09.2005
(51) Int. Cl.: B64F 5/00, B64C 3/28, B64C 3/20, B64C 3/24, B29C 70/48, B29C 70/34

(54) **Process for manufacturing a monolithic leading edge**

(71) Applicant: EADS Construcciones Aeronauticas, S.A., 28022 Madrid (ES)
(72) Inventor: Jiménez Gahete, Antonio, 28220 Madrid (ES); Ambite Iglesias, Juan Carlos, 28901 Madrid (ES); Martin Prieto, Fernando, Pozuelo de Alarcon 28224 Madrid (ES); Cala Romero, Antonio, 41020 Sevilla (ES)
(74) Representative: Elzaburu Marquez, Alberto

(57) **Abstract**

Process for manufacturing a monolithic leading edge (21) for aircraft aerodynamic surfaces formed by an outer skin (23) and a plurality of inner ribs (25) characterised by comprising the following steps: a) providing a male tool made the assembly of a plurality of blocks (31); b) cutting dry carbon fibers layers for the skin (23) and the ribs (25); c) laminating dry fibers layers on the lateral sides (32) of said blocks (31) forming half ribs (37); d) assembling the male tool (33) with the ribs (25) to be formed with two half ribs (37) laminated on adjacent blocks (31) integrated on it;. e) laminating dry fibers layers (39) for the skin (23) on the male tool (33); f) placing the female tool (35) over the male tool (33) closing a mould for the next step; g) performing a resin injection / curing process under high temperature conditions.

## Description

### FIELD OF THE INVENTION

The invention relates to a process for manufacturing a monolithic leading edge of aircraft aerodynamic surfaces, such as wings, stabilisers and control surfaces, using composite materials.

### BACKGROUND

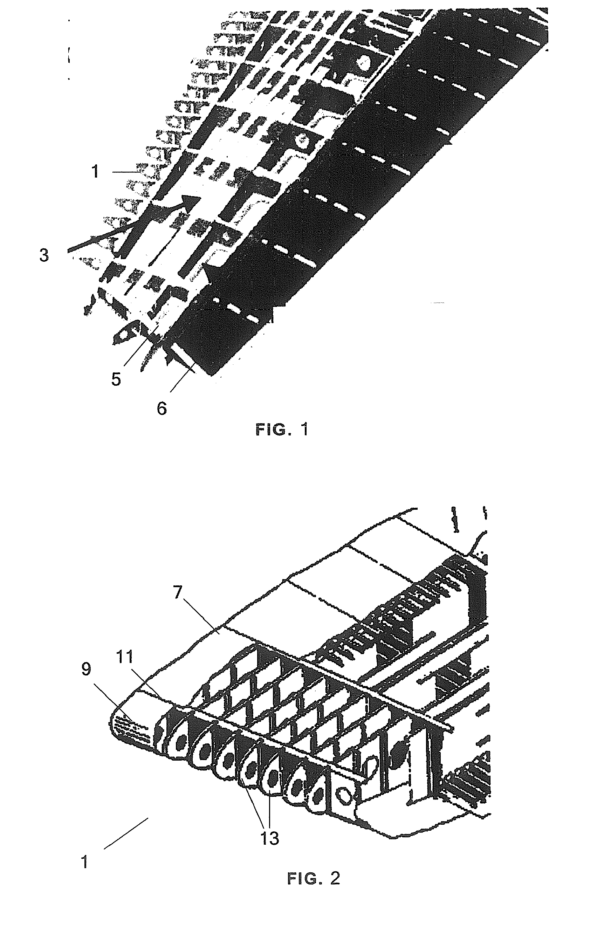

A typical aircraft aerodynamic surface (Fig. 1) comprises a leading edge 1, a central block 3, a trailing edge 5 and a control surface 6.

A leading edge of an aircraft aerodynamic surfaces consists basically of two different parts:
- a primary structure, mainly structural, formed by upper and lower covering panels and auxiliary supporting spars; and
- a secondary structure, called frontal area, which closes the leading edge at the front and has a specific object of withstanding erosion and typical impacts, the most common problems in this area.

Known leading edges 1 (Figs. 1 and 2) had a metallic structure, both in the structural 7 and in the frontal areas 9, with a configuration of an outer panel 11 and an inner structure 13 of the multi-rib type.

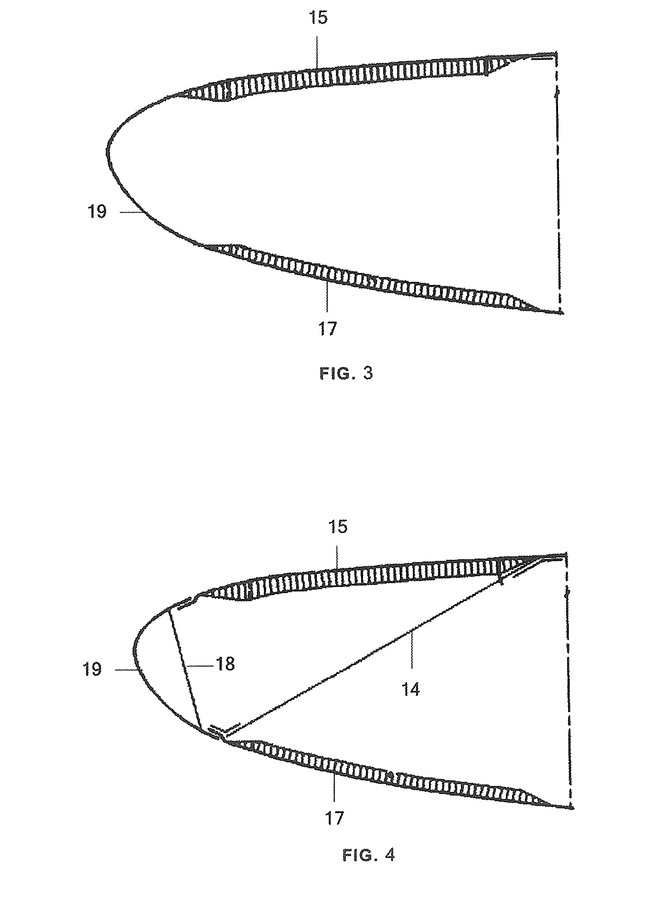

With the new developments in the field of composite materials, leading edges designed with primary and secondary structures made of fibers were proposed. There are also known leading edges with upper 15 and lower 17 panel structures of the "sandwich" type, with practically no ribs, being the frontal part 19 made of composite material (Figs. 3 and 4). This is the case of the leading edge disclosed in EP 1176089 of the same applicant having a typical sandwich composite structure for the upper 15 and lower panels 17, and with supporting diagonal 14 and frontal 18 spars. (Fig. 4).

This invention is intended to provide an leading edge with a better structural behaviour than known leading edges.

### SUMMARY OF THE INVENTION

Leading edges for aircraft aerodynamic surfaces have to perform the following requirements:
- Maintain the aero dynamical shape in the front part of the leading edge surface;
- Transfer aero dynamical forces to the main structure (central block);
- Maintain the integrity of the main structure (central block) under severe conditions like bird impacts, at landing, at taking-off, etc. ;
- Withstand erosion in cruise flight; and
- Be detachable for permitting access to the main structure (central block).

To accomplish these objectives, the present invention provides a process for manufacturing a leading edge in one monolithic piece made of composite material.

Instead of a structure with separated upper and lower panel structures, frontal area, and supporting spars, the leading edge obtained by the process of this invention consists of an outer skin, which covers upper, lower and frontal areas, and an inner structure of supporting ribs.

The process comprises the following steps:
a) providing a plurality of blocks that will be assembled together to obtain a male tool with an outer surface of similar shape than the inner surface of the skin and a female tool with an inner surface of similar shape than the outer surface of the skin;
b) cutting dry carbon fibers layers for the skin and the ribs;
c) laminating dry fibers layers on the lateral sides of said blocks forming half ribs;
d) assembling together said blocks obtaining a male tool with the ribs to be formed joining two half ribs laminated on adjacent blocks integrated on it;
e) laminating dry fibers layers on the male tool to form the skin;
f) placing the female tool over the male tool closing a mould for the next step;
g) performing a resin injection / curing process under high temperature conditions;

One advantage of this invention is that this process allows the manufacturing of a leading edge in a shorter time than in the known art.

Another advantage is that the leading edge obtained by the process of this invention improves the structural behavior of known leading edges as the ribs and the skin are integrated in a single structural element.

Another advantage is that the leading edge has not any mechanical joint.

Another advantage is that a later trimming of the manufactured leading edge is not necessary.

### BRIEF DESCRIPTION OF DRAWINGS

The features, objects and advantages of the invention will become apparent by reading this description in conjunction with the accompanying drawings, in which:
Figure 1 shows a typical structure of an aircraft aerodynamic surface.
Figure 2 shows a detailed view of the leading edge of Fig. 1, a known metallic multi-rib leading edge.
Figure 3 is a sectional view of a known leading edge with upper and lower "sandwich" panels.
Figure 4 is a sectional view of a known leading edge with upper and lower "sandwich" panels with diagonal and frontal auxiliary supporting spars.

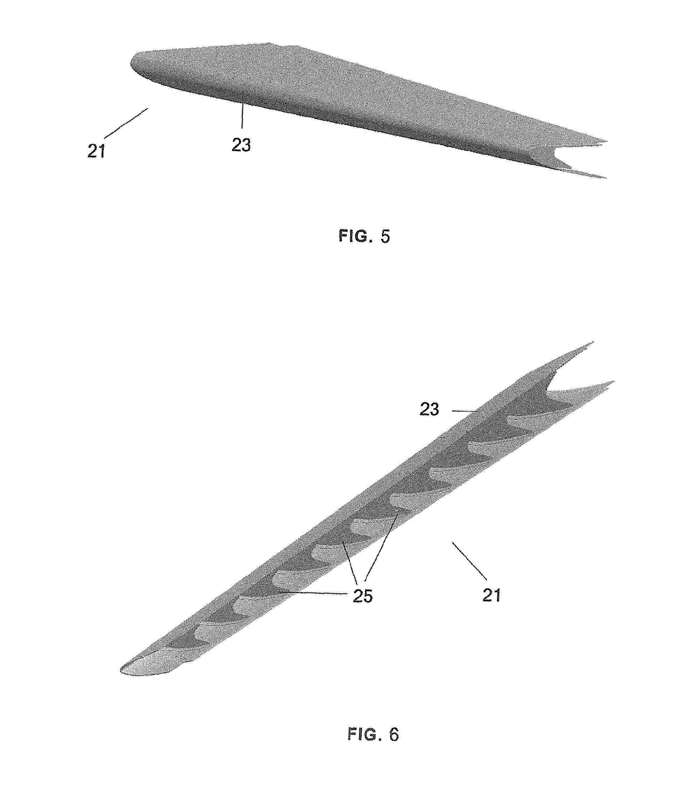

Figures 5 and 6 are views of the monolithic leading edge according to the invention.

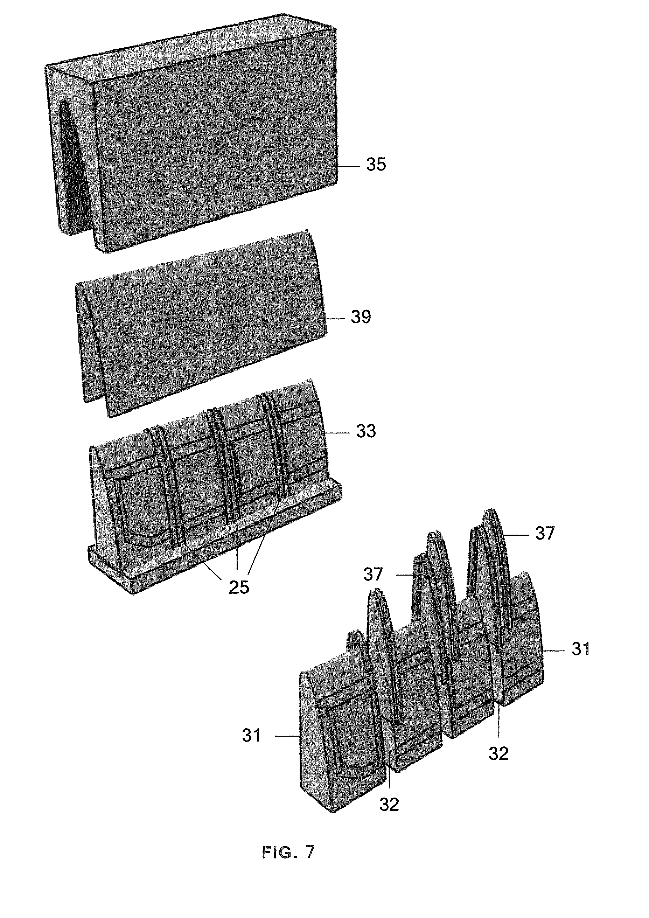

Figure 7 shows the tooling using in the process for manufacturing a monolithic leading edge according to this invention.

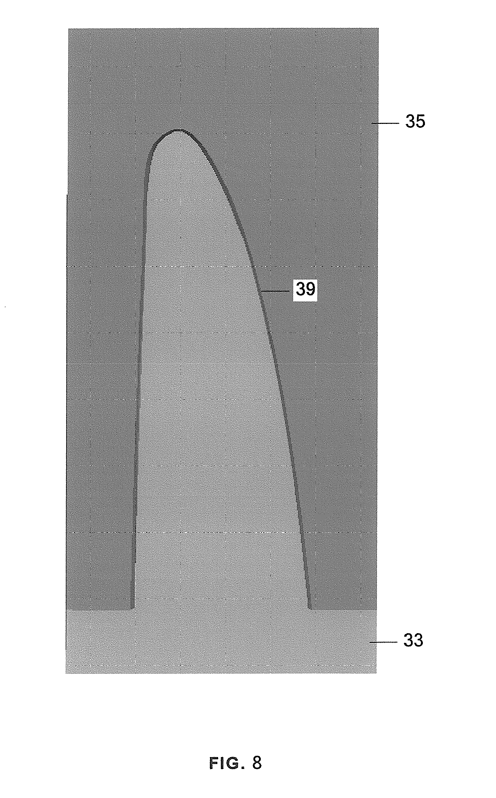

Figure 8 is a section view of the injection and curing mould after closing it.

### DETAILED DESCRIPTION OF PREFERRED EMBODIMENTS

The leading edge manufactured according to the process which is the subject matter of this invention is a monolithic piece 21 in which the skin 23 and the ribs 25 are fully integrated.

The manufacturing process includes the following steps.
a) Providing a plurality of blocks 31 that will be assembled together to obtain a male tool 33 with an outer surface of similar shape than the inner surface of the skin 23 and a female tool 35 with an inner surface of similar shape than the outer surface of the skin 23. Male and female tools are made of the same material, preferably steel, to avoid differential thermal dilatations.
b) Cutting dry carbon fibers layers for the skin 23 and the ribs 25 according to master pieces.
c) Laminating dry fibers layers on the lateral sides 32 of said blocks 31 forming half ribs 37.
d) Assembling together said blocks 31 obtaining a male tool 33 with the ribs 25 to be formed joining two half ribs 37 laminated on adjacent blocks integrated on it.
e) Laminating dry fibers layers 39 on the male tool 33 to forming the skin 23 with the required profile.
f) placing the female tool 35 over the male tool 33 closing a mould for the next step;
g) performing a resin injection / curing process under high temperature conditions following a Resin Transfer Moulding (RTM) technique.

Although the present invention has been fully described in connection with preferred embodiments, it is evident that modifications may be introduced within the scope thereof, not considering this as limited by these embodiments, but by the contents of the following claims.

## Claims

1. Process for manufacturing a monolithic leading edge (21) for aircraft aerodynamic surfaces formed by an outer skin (23) and a plurality of inner ribs (25) **characterised by** comprising the following steps:
a) providing a plurality of blocks (31) that will be assembled together to obtain a male tool (33) with an outer surface of similar shape than the inner surface of the skin (23) and a female tool (35) with an inner surface of similar shape than the outer surface of the skin (23);
b) cutting dry carbon fibers layers for the skin (23) and the ribs (25);
c) laminating dry fibers layers on the lateral sides (32) of said blocks (31) forming half ribs (37);
d) assembling together said blocks (31) obtaining a male tool (33) with the ribs (25) to be formed with two half ribs (37) laminated on adjacent blocks (31) integrated on it.
e) laminating dry fibers layers (39) for the skin (23) on the male tool (33);
f) placing the female tool (35) over the male tool (33) closing a mould for the next step; and
g) performing a resin injection / curing process under high temperature conditions.

2. Process for manufacturing a monolithic leading edge (21) for aircraft aerodynamic surfaces according to claim 1 wherein the male and female tools are made of the same material.

3. Process for manufacturing a monolithic leading edge (21) for aircraft aerodynamic surfaces according to claim 2 wherein the male and female tools are made of steel.

4. Process for manufacturing a monolithic leading edge (21) for aircraft aerodynamic surfaces according to claim 1 wherein the resin injection / curing process is performed following a Resin Transfer Moulding technique.
